# EUROPEAN PATENT APPLICATION

(11) **EP 4 113 022 A1**
(43) Date of publication of application: **04.01.2023**
(21) Application number: 20920857.8
(22) Date of filing: 27.02.2020
(51) Int. Cl.: F24F 1/38, F24F 1/46

(54) **OUTDOOR UNIT AND AIR-CONDITIONING DEVICE**

(71) Applicant: MITSUBISHI ELECTRIC CORPORATION, Chiyoda-ku Tokyo 100-8310 (JP)
(72) Inventor: SHIMOKAWA, Takaya, Tokyo 100-8310 (JP); ASO, Hiroki, Tokyo 100-8310 (JP); TSUCHIDA, Kazuchika, Tokyo 100-8310 (JP); WATANABE, Takanori, Tokyo 100-8310 (JP); TAKAHASHI, Ryogo, Tokyo 100-8310 (JP); TAMURA, Naoki, Tokyo 100-8310 (JP)
(74) Representative: Pfenning, Meinig & Partner mbB
(86) International application number: PCT/JP2020/008002
(87) International publication number: WO 2021/171471

(57) **Abstract**

An outdoor unit includes a motor and a heat exchanger. The motor includes a rotor, a stator, and a heat dissipation member. The rotor is rotatable about an axis, and has a rotor core and a permanent magnet attached to the rotor core. The permanent magnet forms a magnet magnetic pole. A part of the rotor core forms a virtual magnetic pole. The stator surrounds the rotor from outside in a radial direction about the axis. The heat dissipation member is disposed on a side of the stator in a direction of the axis. The heat exchanger is disposed to face the heat dissipation member in the direction of the axis.

## Description

### TECHNICAL FIELD

The present disclosure relates to an outdoor unit and an air conditioner.

### BACKGROUND ART

An outdoor unit includes a blower and a heat exchanger. The blower includes a fan portion and a motor for rotating the fan portion. An example of the motor includes a consequent pole rotor having a magnet magnetic pole formed by a permanent magnet and a virtual magnetic pole formed by a rotor core (see, for example, Patent Reference 1).

### PRIOR ART REFERENCE

### PATENT REFERENCE

Patent Reference 1: International Publication No. WO2018/179025 (see FIGS. 1 and 2)

### SUMMARY OF THE INVENTION

### PROBLEM TO BE SOLVED BY THE INVENTION

In the consequent pole rotor, the virtual magnetic pole has no permanent magnet, and thus a part of magnetic flux from the magnet magnetic pole tends to leak out of the motor. When magnetic flux flows in a member such as a bearing or a circuit board disposed around the motor, heat is generated by electromagnetic induction when the rotor rotates. In view of this, it is required to efficiently dissipate heat from the motor.

The present disclosure is made to solve the problem described above, and an object of the present disclosure is to efficiently dissipate heat from a motor.

### MEANS OF SOLVING THE PROBLEM

An outdoor unit according to the present disclosure includes a motor and a heat exchanger. The motor includes a rotor, a stator, and a heat dissipation member. The rotor is rotatable about an axis, and has a rotor core and a permanent magnet attached to the rotor core. The permanent magnet forms a magnet magnetic pole, and a part of the rotor core forms a virtual magnetic pole. The stator surrounds the rotor from outside in a radial direction about the axis. The heat dissipation member is disposed on a side of the stator in a direction of the axis. The heat exchanger is disposed to face the heat dissipation member in the direction of the axis.

### EFFECTS OF THE INVENTION

According to the present disclosure, since the heat exchanger is disposed to face the heat dissipation member, air which passes through the heat exchanger and whose temperature decreases can be blown to the heat dissipation member. Thus, heat can be efficiently dissipated from the motor through the heat dissipation member.

### BRIEF DESCRIPTION OF THE DRAWINGS

FIG. 1 is a longitudinal sectional view illustrating an outdoor unit according to a first embodiment.
FIG. 2 is a longitudinal sectional view illustrating a blower according to the first embodiment.
FIG. 3 is a cross sectional view illustrating a motor according to the first embodiment.
FIG. 4 is a cross sectional view illustrating a rotor according to the first embodiment.
FIG. 5 is a longitudinal sectional view illustrating a mold stator according to the first embodiment.
FIGS. 6(A) and 6(B) are a plan view and a side view illustrating the mold stator according to the first embodiment.
FIG. 7 is a front view illustrating a support plate according to the first embodiment.
FIG. 8 is a diagram illustrating a relationship among a heat exchanger, a heat dissipation member, and the support plate in the first embodiment.
FIG. 9 is a schematic view illustrating the heat exchanger according to the first embodiment.
FIG. 10(A) is a schematic view for explaining a flow of magnetic flux in a consequent pole rotor, and FIG. 10(B) is a schematic view for explaining a flow of magnetic flux in a non-consequent pole rotor.
FIG. 11 is a schematic view illustrating a flow of air in the blower according to the first embodiment.
FIG. 12 is a schematic view illustrating a flow of heat in the blower according to the first embodiment.
FIG. 13 is a schematic view for explaining areas of exposed surfaces of the heat dissipation member and a bracket in the blower according to the first embodiment.

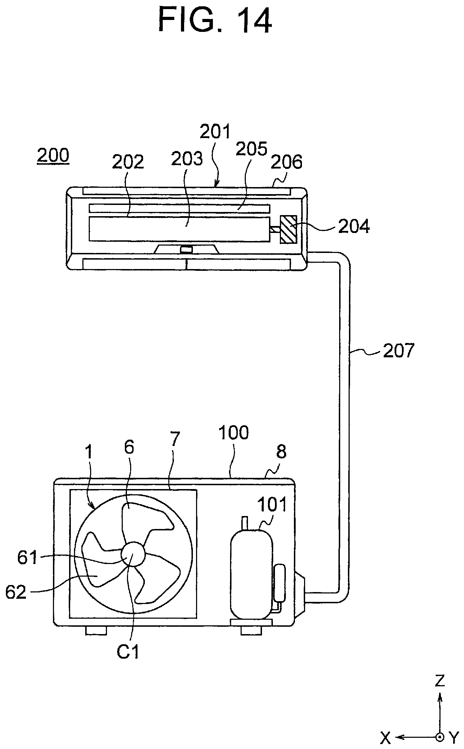

FIG. 14 is a view illustrating an air conditioner including the outdoor unit according to the first embodiment.

### MODE FOR CARRYING OUT THE INVENTION

### FIRST EMBODIMENT

### (Configuration of Outdoor Unit)

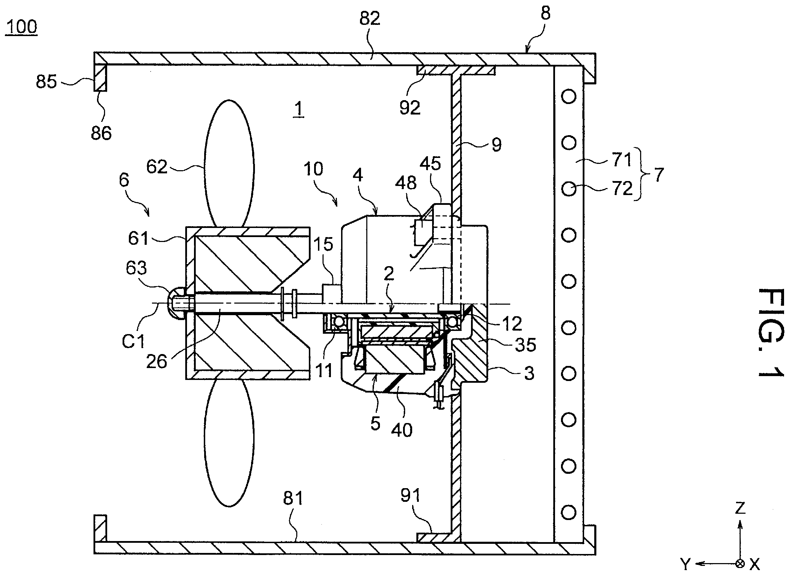

An outdoor unit 100 according to a first embodiment will be described. FIG. 1 is a longitudinal sectional view illustrating an outdoor unit 100 according to the first embodiment. The outdoor unit 100 constitutes a part of an air conditioner such as a room air conditioner.

As illustrated in FIG. 1, the outdoor unit 100 includes a unit housing 8 as an outer frame, a blower 1 disposed inside the unit casing 8, a support plate 9 supporting the blower 1, and a heat exchanger 7 disposed at the rear of the unit casing 8.

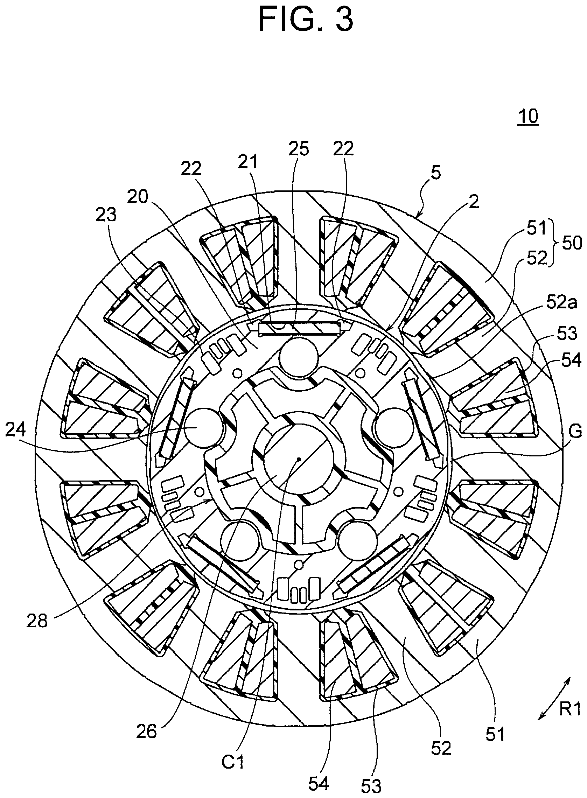

A direction of an axis C1 that is a rotation center axis of a motor 10 (described later) of the blower 1 will be referred to as an axial direction. A circumferential direction about the axis C1 will be referred to as a "circumferential direction" and indicated by arrow R1 in FIG. 3 and other figures. A radial direction about the axis C1 will be referred to as a "radial direction." A sectional view parallel to the axial direction will be referred to as a "longitudinal sectional view," and a sectional view orthogonal to the axial direction will be referred to as a "cross sectional view."

The outdoor unit 100 is placed on a horizontal plane in this example. The horizontal plane will be referred to as an XY plane and a vertical direction will be referred to as a Z direction. A Y direction is parallel to the axial direction and a front-rear direction of the outdoor unit 100.

The unit casing 8 includes a bottom plate 81 and a top plate 82, and also includes not shown side plates at both ends in an X direction. Each of the bottom plate 81, the top plate 82, and the side plates is made of, for example, a sheet metal.

A front panel 85 is attached to the front face of the unit casing 8. The front panel 85 has an opening 86, and a not shown grille is fitted to the opening 86. The grille is formed by combining a plurality of steel wires in a lattice pattern. The opening 86 is a portion through which air is blown out by the blower 1.

The support plate 9 extends in the Z direction, and has a lower arm 91 at the lower end and an upper arm 92 at the upper end. The lower arm 91 of the support plate 9 is fixed to the bottom plate 81. The top plate 82 is fixed to the upper arm 92 of the support plate 9. The support plate 9 is made of, for example, a metal such as carbon steel. The motor 10 of the blower 1 is fixed to the support plate 9 with screws 48.

### (Configuration of Blower)

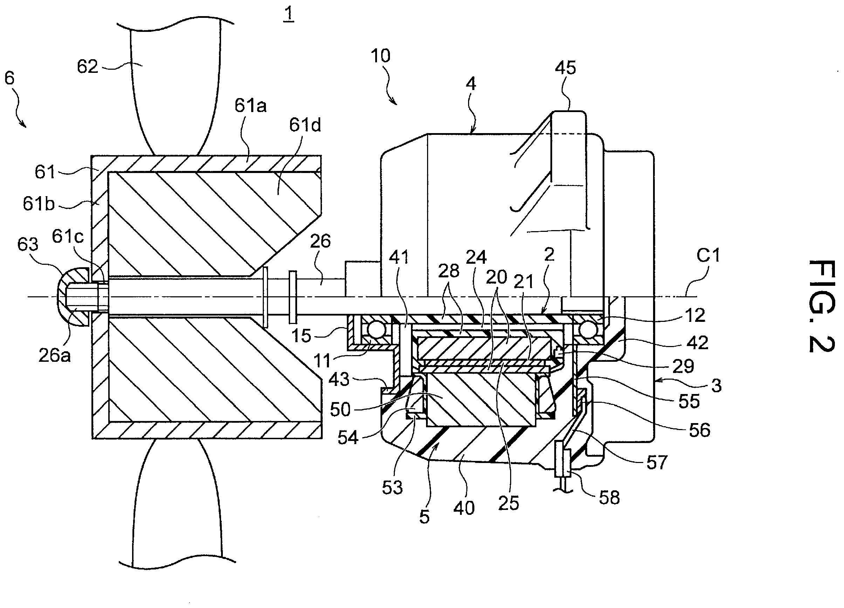

FIG. 2 is a longitudinal sectional view illustrating the blower 1. The blower 1 includes the motor 10, and a fan portion 6 that rotates by the motor 10. The motor 10 includes a rotor 2 having a shaft 26, and a stator 5 surrounding the rotor 2 from outside in the radial direction. A center axis of the shaft 26 is the axis C1 described above. The fan portion 6 is fixed to the shaft 26 of the motor 10. In the direction of the axis C1, the side at which the fan portion 6 is provided is the front side.

The motor 10 includes a mold resin portion 40 surrounding the stator 5 from outside in the radial direction. The mold resin portion 40 is made of a thermosetting resin such as bulk molding compound (BMC). The stator 5 and the mold resin portion 40 constitute a mold stator 4.

The mold resin portion 40 includes an opening 41 on one side in the axial direction and a bearing holding portion 42 on the other side. The rotor 2 of the motor 10 is inserted into a hollow portion inside the mold stator 4 through the opening 41.

The shaft 26 projects from the opening 41 of the mold stator 4 in the axial direction. The fan portion 6 is attached to the tip end of the shaft 26. Thus, a side at which the shaft 26 projects will be referred to as a "load side" and the opposite side will be referred to as a "counter-load side."

A bracket 15 as a rotor holding member is attached to the opening 41 of the mold resin portion 40. The bracket 15 is made of a metal such as a galvanized steel sheet. The bracket 15 holds one bearing 11 supporting the shaft 26. The bearing holding portion 42 of the mold resin portion 40 holds the other bearing 12 supporting the shaft 26.

The mold resin portion 40 includes attachment legs 45 projecting outward in the radial direction. The attachment legs 45 of the mold resin portion 40 are fixed to the support plate 9 with the screws 48 (FIG. 1) as fixing members.

In the mold resin portion 40, a circuit board 55 is disposed on the counter-load side of the stator 5. The circuit board 55 is a printed board on which a device 56 such as a power transistor for driving the motor 10 is mounted, and lead wires 57 are wired on the circuit board 55.

The lead wires 57 of the circuit board 55 are drawn to the outside of the motor 10 via a lead wire outlet part 58 attached to an outer peripheral portion of the mold resin portion 40. A magnetic sensor for detecting a rotation position of the rotor 2 is provided on a surface of the circuit board 55 facing the stator 5.

Although the stator 5 is covered with the mold resin portion 40 in this example, the stator 5 may be covered with a housing of a metal, for example, instead of the mold resin portion 40.

The shaft 26 of the rotor 2 is made of an iron or stainless steel. The shaft 26 is rotatably supported by the bearing 11 held by the bracket 15 and the bearing 12 held by the bearing holding portion 42.

The fan portion 6 includes a bottomed cylindrical hub 61 attached to the shaft 26, and a plurality of blades 62 provided on the outer periphery of the hub 61. The hub 61 includes a cylindrical wall 61a about the axis C1, a disk portion 61b located at an end of the cylindrical wall 61a in the axial direction, and a plurality of ribs 61d formed on the inner peripheral side of the cylindrical wall 61a.

The disk portion 61b of the hub 61 has a through hole 61c through which a screw portion 26a formed at the tip end of the shaft 26 passes. The plurality of ribs 61d on the inner peripheral side of the cylindrical wall 61a are formed at regular intervals in the circumferential direction. The hub 61 is fixed to the shaft 26 by attaching a nut 63 to the screw portion 26a of the shaft 26.

The blades 62 are arranged at regular intervals in the circumferential direction at the outer periphery of the hub 61. The number of the blades 62 is, for example, three, and only needs to be two or more. The fan portion 6 rotates together with the shaft 26 so that the blades 62 generate an air flow in the axial direction.

The fan portion 6 is preferably made of a resin. More specifically, the fan portion 6 is preferably made of a material in which glass fibers and mica are added to polypropylene (PP).

### (Configuration of Motor)

FIG. 3 is a cross sectional view illustrating the motor 10. As described above, the motor 10 includes the rotor 2 and the annular stator 5 surrounding the rotor 2. The motor 10 is also a permanent magnet-embedded motor in which permanent magnets 25 are embedded in the rotor 2. An air gap G of, for example, 0.4 mm is provided between the rotor 2 and the stator 5.

As illustrated in FIG. 3, the stator 5 includes a stator core 50 and a coil 54 wound on the stator core 50. The stator core 50 is formed by stacking a plurality of electromagnetic steel sheets in the axial direction and fixing the sheets by crimping, for example. The thickness of each electromagnetic steel sheet is, for example, 0.2 mm to 0.5 mm.

The stator core 50 includes a yoke 51 in an annular shape about the axis C1, and a plurality of teeth 52 extending inward in the radial direction from the yoke 51. The teeth 52 are arranged at regular intervals in the circumferential direction. The number of the teeth 52 is 12 in this example, but is not limited to 12. A slot that is a space accommodating the coil 54 is formed between adjacent ones of the teeth 52.

A tip end portion 52a at an inner side of the tooth 52 in the radial direction has a width in the circumferential direction wider than the other portions of the tooth 52. The tip end portion 52a of the tooth 52 faces the outer periphery of the rotor 2 via the above-described air gap G.

An insulating portion 53 of polybutylene terephthalate (PBT) or the like is attached to the stator core 50. The insulating portion 53 is obtained by integrally molding a resin with the stator core 50 or by assembling a resin molded body, which is previously molded, to the stator core 50. The coil 54 is wound around the teeth 52 via the insulating portion 53. The coil 54 is made of copper or aluminum.

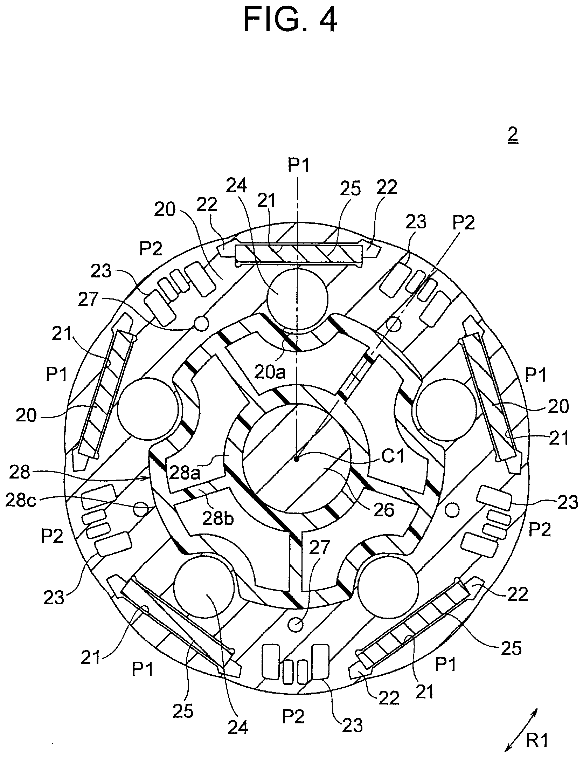

FIG. 4 is a cross sectional view illustrating the rotor 2. A rotor core 20 is an annular member about the axis C1. The rotor core 20 is formed by stacking a plurality of electromagnetic steel sheets in the axial direction and fixing the sheets with crimping portions 27. The thickness of each electromagnetic steel sheet is, for example, 0.2 mm to 0.5 mm.

The rotor core 20 has a plurality of magnet insertion holes 21. The magnet insertion holes 21 are arranged at regular intervals in the circumferential direction and at the same distance from the axis C1. The number of the magnet insertion holes 21 is five in this example.

Each magnet insertion hole 21 linearly extends in a direction orthogonal to a line (referred to as a magnetic pole center line) in the radial direction passing through the center in the circumferential direction, that is, a pole center. The magnet insertion hole 21 is not limited to such a shape, but may extend in a V shape, for example.

Flux barriers 22 that are holes are formed at both ends of each magnet insertion hole 21 in the circumferential direction. A thin portion is formed between the flux barrier 22 and the outer periphery of the rotor core 20. To reduce magnetic flux leakage between adjacent magnetic poles, the thickness of each thin portion is preferably equal to the thickness of each electromagnetic steel sheet of the rotor core 20.

A permanent magnet 25 is inserted in each magnet insertion hole 21. The permanent magnet 25 is in the form of a flat plate, and has a rectangular shape in a cross section orthogonal to the axial direction. The permanent magnet 25 is constituted by a rare earth magnet. More specifically, the permanent magnet 25 is constituted by a neodymium sintered magnet containing neodymium (Nd), iron (Fe), and boron (B).

The permanent magnets 25 are arranged so that the same magnetic poles (for example, north poles) face the outer peripheral side of the rotor core 20. In the rotor core 20, a magnetic pole (for example, south pole) opposite to the permanent magnets is formed in each region between the permanent magnets adjacent to each other in the circumferential direction.

Thus, the rotor 2 includes five magnet magnetic poles P1 formed by the permanent magnets 25 and five virtual magnetic poles P2 formed by the rotor core 20. Such a configuration will be referred to as a consequent pole. In the following description, a simple term "magnetic pole" indicates either the magnet magnetic pole P1 or the virtual magnetic pole P2. The rotor 2 includes ten magnetic poles.

In the consequent pole rotor 2, the number of permanent magnets 25 can be halved, as compared to a non-consequent pole rotor having the same number of magnet poles. Since the number of expensive permanent magnets 25 is small, the manufacturing cost of the rotor 2 is reduced.

The number of poles of the rotor 2 is 10 in this example, but only needs to be any even number of four or more. In this example, one permanent magnet 25 is disposed in each magnet insertion hole 21, but two or more magnets 25 may be disposed in each magnet insertion hole 21. The magnet magnetic poles P1 may be south poles, and the virtual magnetic poles P2 may be north poles.

The rotor core 20 includes at least one slit 23 elongated in the radial direction in each virtual magnetic pole P2. The slit 23 has a function to rectify a flow of magnetic flux, which passes through the virtual magnetic pole P2, in the radial direction. In this regard, the slit 23 is not necessarily formed in the virtual magnetic pole P2.

The rotor core 20 has a cavity portion 24 at the inner side of each magnet insertion hole 21 in the radial direction. The cavity portion 24 is provided to uniformize, in the circumferential direction, a flow of magnetic flux at the inner side of the magnet insertion hole 21 in the radial direction.

At the inner periphery of the rotor core 20, projections 20a projecting inward in the radial direction are formed at portions where the cavity portions 24 are formed. Each projection 20a functions as a rotation stopper for the rotor core 20 with respect to a resin portion 28 described below. In this regard, the projections 20a are not necessarily formed at the inner periphery of the rotor core 20.

The nonmagnetic resin portion 28 is provided between the shaft 26 and the rotor core 20. The resin portion 28 connects the shaft 26 and the rotor core 20 to each other. The resin portion 28 is made of, for example, a thermoplastic resin such as PBT.

The resin portion 28 includes an annular inner cylindrical portion 28a in contact with the outer periphery of the shaft 26, an annular outer cylindrical portion 28c in contact with the inner periphery of the rotor core 20, and a plurality of ribs 28b connecting the inner cylindrical portion 28a and the outer cylindrical portion 28c to each other.

The shaft 26 penetrates the inner cylindrical portion 28a of the resin portion 28 in the axial direction. The ribs 28b are arranged at regular intervals in the circumferential direction, and extend radially outward in the radial direction from the inner cylindrical portion 28a. The number of ribs 28b is half the number P of magnetic poles, and the position of each rib 28b in the circumferential direction coincides with the pole center of the virtual magnetic pole P2. The number and arrangement of the ribs 28b are not limited to those in the example described here.

As illustrated in FIG. 2, a sensor magnet 29 is disposed on the counter-load side of the rotor core 20. The sensor magnet 29 is held by the resin portion 28. A magnetic field of the sensor magnet 29 is detected by a magnetic sensor mounted on the circuit board 55, so that a rotation position of the rotor 2 is detected.

Although the resin portion 28 is provided between the rotor core 20 and the shaft 26 in this example, it is also possible to fit the shaft 26 into a center hole of the rotor core 20 without providing the resin portion 28.

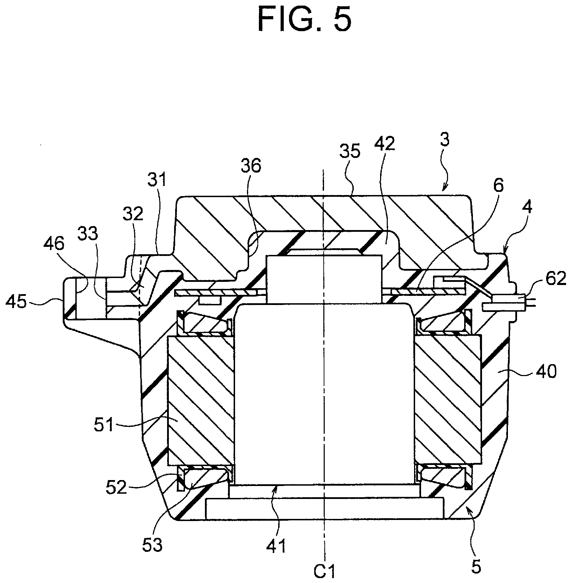

FIG. 5 is a longitudinal sectional view illustrating the mold stator 4. A heat dissipation member 3 is provided on the counter-load side of the stator 5. The heat dissipation member 3 is made of, for example, a metal, and more specifically, aluminum or copper. The heat dissipation member 3 includes a flange 31, legs 32, and fins 35.

The flange 31 is formed in an annular shape about the axis C1. The legs 32 extend outward in the radial direction from the flange 31. The fins 35 are formed at the inner side of the flange 31 in the radial direction. The heat dissipation member 3 includes a concave 36 on the side facing the stator 5. The concave 36 is a portion in which the bearing 12 is housed (FIG. 1).

The heat dissipation member 3, the stator 5, and the circuit board 55 are held integrally by the mold resin portion 40 (FIG. 1), and constitute the mold stator 4. The legs 32 of the heat dissipation member 3 are covered with the mold resin portion 40. In contrast, the flange 31 and the fins 35 of the heat dissipation member 3 are not covered with the mold resin portion 40 and are exposed to the outside.

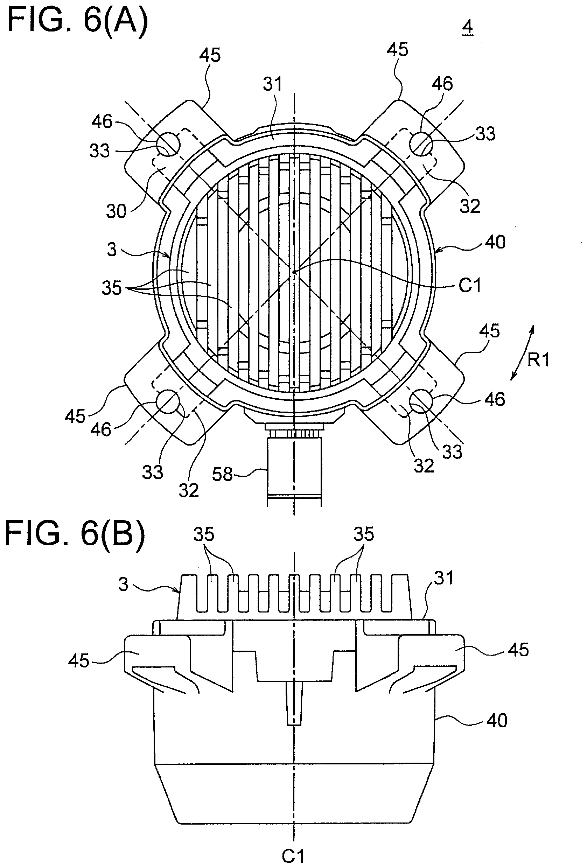

FIGS. 6(A) and 6(B) are respectively a plan view and a side view illustrating the mold stator 4. As illustrated in FIG. 6(A), the mold resin portion 40 includes the plurality of attachment legs 45 arranged at the same distance from the axis C1. In this example, four attachment legs 45 are formed at intervals of 90 degrees about the axis C1. The number of the attachment legs 45 is not limited to four.

The attachment legs 45 have holes 46. The holes 46 are portions through which the screws 48 (FIG. 1) for fixing the motor 10 are inserted.

The plurality of legs 32 extend outward in the radial direction from the flange 31 of the heat dissipation member 3. The plurality of legs 32 are formed at the same distance from the axis C1, and arranged at regular intervals about the axis C1.

In this example, the number of legs 32 is the same as the number of attachment legs 45 of the mold resin portion 40. The legs 32 are formed at locations corresponding to the attachment legs 45. That is, the four legs 32 are formed at intervals of 90 degrees about the axis C1.

Recesses 32 are formed on the tip end portions of the legs 32. The recesses 33 of the legs 32 are formed at locations overlapping with the holes 46 of the attachment legs 45 in the axial direction.

The plurality of fins 35 of the heat dissipation member 3 are arranged in a direction (left-right direction in FIG. 6(A)) orthogonal to the axis C1. Each fin 35 has a length in a direction (vertical direction in FIG. 6(A)) orthogonal to the arrangement direction and has a height in the axial direction.

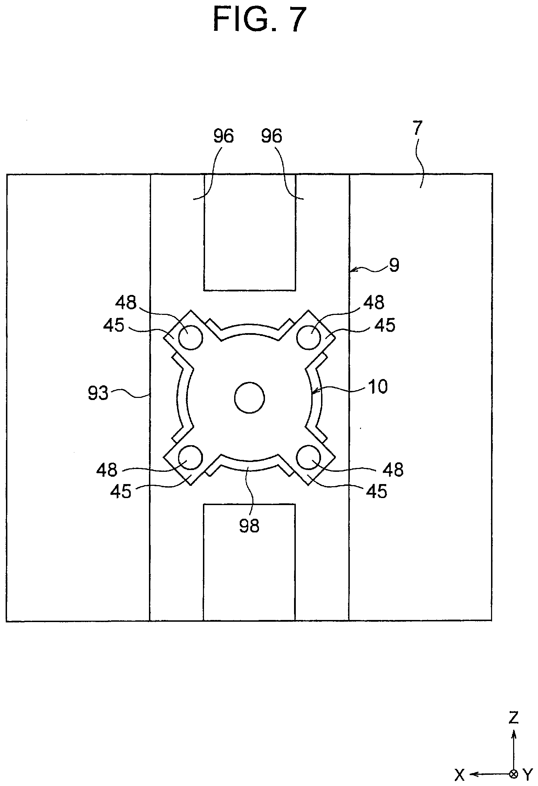

FIG. 7 is a front view illustrating the motor 10, the support plate 9, and the heat exchanger 7. The support plate 9 includes an attachment portion 93. The motor 10 is fixed to the center of the attachment portion 93 in the Z direction. The mold resin portion 40 of the motor 10 is fixed to the attachment portion 93 with the screws 48 inserted through the attachment legs 45. The attachment portion 93 may be provided with an arc-shaped frame 98 surrounding the outer periphery of the mold resin portion 40.

A width of the support plate 9 in the X direction is narrower than the width of the heat exchanger 7 in the X direction. This configuration is intended to reduce a ventilation resistance to an air flow passing through the heat exchanger 7. To reduce the ventilation resistance, each of upper and lower portions of the attachment portion 93 of the support plate 9 is constituted by a pair of columnar portions 96 elongated in the Z direction.

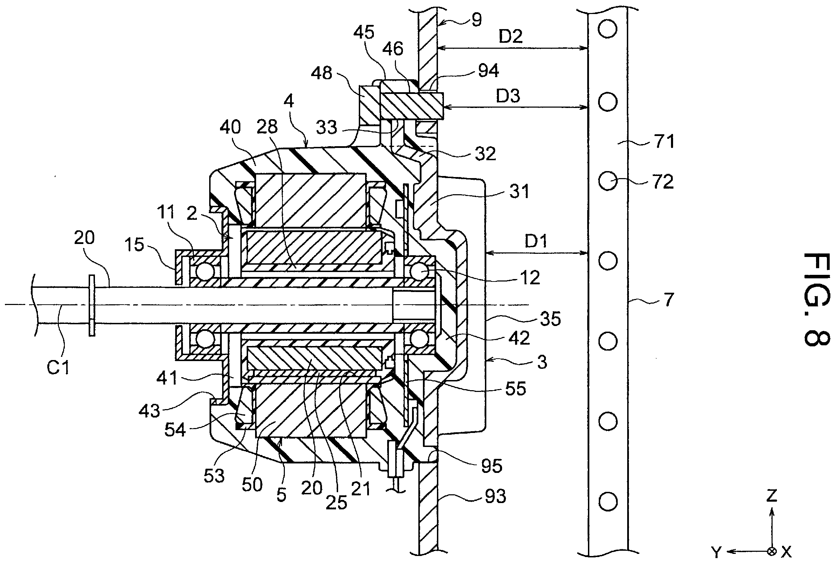

FIG. 8 is a sectional view illustrating a portion including the motor 10, the support plate 9, and the heat exchanger 7. The attachment portion 93 of the support plate 9 has an opening 95 in which the mold resin portion 40 is inserted. The mold resin portion 40 of the motor 10 is inserted in the opening 95 of the support plate 9 so that the heat dissipation member 3 faces the heat exchanger 7.

The screws 48 pass through the holes 46 formed in the attachment legs 45 of the mold resin portion 40 and the recesses 33 formed in the legs 32 of the heat dissipation member 3, and are fixed to threaded portions 94 provided on the support plate 9. Accordingly, the heat dissipation member 3 is brought into contact with the screws 48, and the screws 48 are brought into contact with the support plate 9.

The screws 48 are made of a metal such as carbon steel. As described above, the heat dissipation member 3 is made of a material such as aluminum, and the support plate 9 is made of a metal such as carbon steel. That is, the heat dissipation member 3, the screws 48, and the support plate 9 are made of metals, and in contact with one another.

As described above, the fins 35 of the heat dissipation member 3 are not covered with the mold resin portion 40, are exposed to the outside, and face the heat exchanger 7. A minimum distance from the heat exchanger 7 to the heat dissipation member 3 will be referred to as a distance D1. More specifically, the distance D1 is a distance from the heat exchanger 7 to end surfaces of the fins 35 of the heat dissipation member 3 facing the heat exchanger 7.

A minimum distance from the heat exchanger 7 to the support plate 9 will be referred to as a distance D2. More specifically, the distance D2 is a distance from the heat exchanger 7 to the surface of the support plate 9 facing the heat exchanger 7.

The distance D1 from the heat exchanger 7 to the heat dissipation member 3 and the distance D2 from the heat exchanger 7 to the support plate 9 satisfy D1 < D2. That is, the heat dissipation member 3 projects from the support plate 9 toward the heat exchanger 7.

A minimum distance from the heat exchanger 7 to the screws 48 will be referred to as a distance D3. More specifically, the distance D3 is a distance from the heat exchanger 7 to the ends of the screws 48 facing the heat exchanger 7.

The distance D1 from the heat exchanger 7 to the heat dissipation member 3, the distance D2 from the heat exchanger 7 to the support plate 9, and the distance D3 from the heat exchanger 7 to the screws 48 satisfy D1 < D3 < D2.

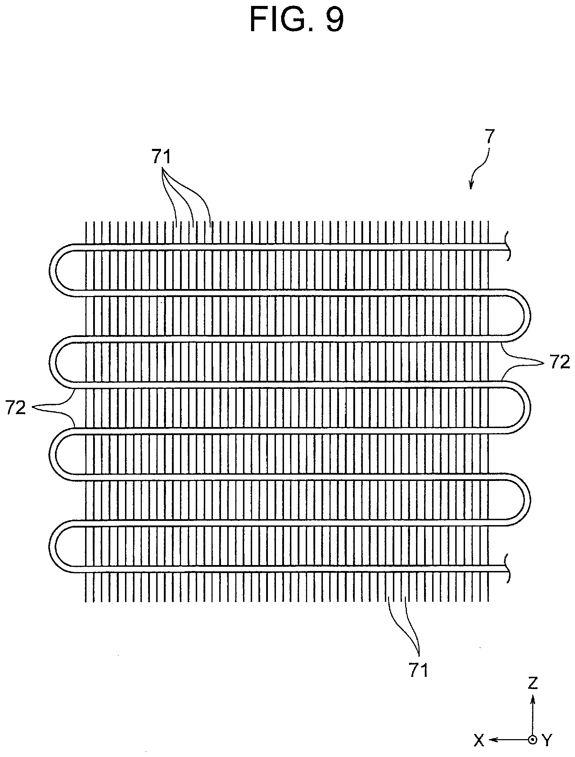

FIG. 9 is a front view illustrating the heat exchanger 7. The heat exchanger 7 includes a plurality of fins 71 arranged in the X direction and elongated in the Z direction, and transfer pipes 72 penetrating through the plurality of fins 71. A gap is formed between each two of the fins 71 adjacent to each other in the X direction.

The fins 71 are made of, for example, aluminum, and the heat transfer pipes 72 are made of, for example, copper. Heat exchange is performed between a refrigerant flowing in the heat exchanger 7 and air passing through the heat exchanger 7.

### (Effects)

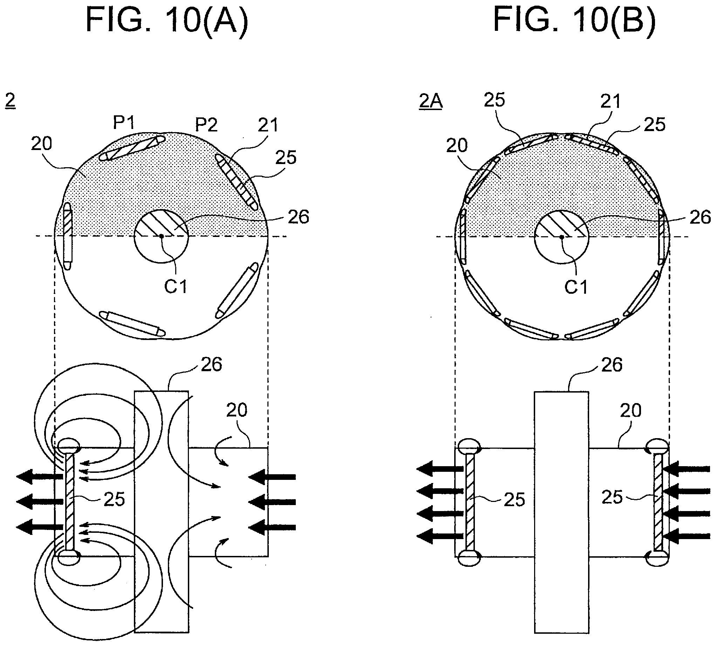

Effects of the first embodiment will now be described. First, magnetic flux leakage in the consequent pole rotor 2 will be described. FIG. 10(A) is a schematic view for explaining a flow of magnetic flux in the consequent pole rotor 2. FIG. 10(B) is a schematic view for explaining a flow of magnetic flux in a non-consequent pole rotor 2A.

In the non-consequent pole rotor 2A, as illustrated in FIG. 10(B), since the permanent magnets 25 are provided at all the magnetic poles, a large part of the magnetic flux exiting from the permanent magnets 25 flows into other permanent magnets 25 by way of the stator 5, and a small part of the magnetic flux leaks from the rotor core 20 in the axial direction.

In contrast, as illustrated in FIG. 10(A), the consequent pole rotor 2 includes the magnetic poles having the permanent magnets 25 and the virtual magnetic poles having no permanent magnets 25. A force for drawing the magnetic flux is small in each virtual magnetic pole, and thus the magnetic flux exiting from the permanent magnet 25 and flowing through the outer side of the rotor core 20 in the axial direction or flowing into the shaft 26 occurs. Consequently, magnetic flux leakage from the rotor core 20 to the outside in the axial direction occurs.

The bearings 11 and 12 and the circuit board 55 are disposed adjacent to the rotor core 20 in the axial direction. When the magnetic flux flows in these members, heat is generated by electromagnetic induction when the rotor 2 rotates. Thus, it is required to efficiently dissipate heat from the motor 10.

In view of this, in the first embodiment, the heat dissipation member 3 is disposed on the side of the stator 5 facing the heat exchanger 7. In a heating operation of the air conditioner, the heat exchanger 7 of the outdoor unit 100 operates as an evaporator, and thus the temperature of air passing through the heat exchanger 7 decreases.

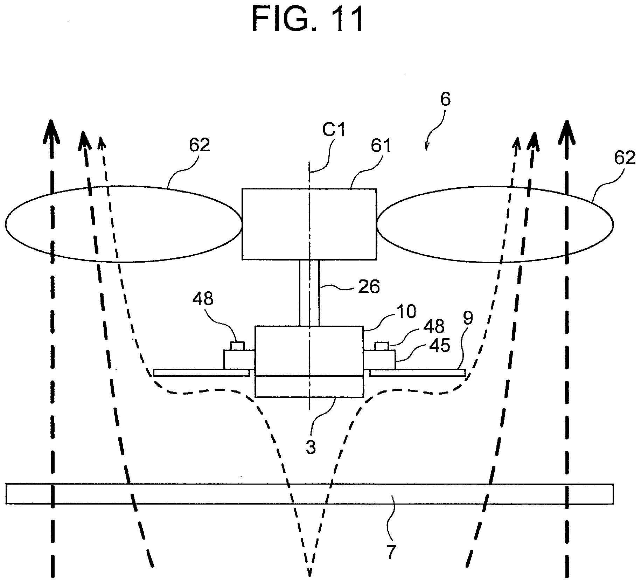

FIG. 11 is a schematic view for explaining a flow of air generated by the rotation of the fan portion 6. As illustrated in FIG. 11, the rotation of the fan portion 6 generates a flow of air in the axial direction passing through gaps between the fins 71 (FIG. 9) of the heat exchanger 7.

Air passing through the heat exchanger 7 is deprived of evaporation heat by the refrigerant in the heat exchanger 7, so that the temperature of the air decreases. The air whose temperature decreases is blown to the heat dissipation member 3. Accordingly, heat can be efficiently dissipated from the motor 10 through the heat dissipation member 3.

To enhance the heat dissipation effect, the distance between the heat dissipation member 3 and the heat exchanger 7 is preferably as small as possible. However, since the support plate 9 supporting the motor 10 occupies a given area in an air passage, a ventilation resistance increases if the support plate 9 is disposed close to the heat exchanger 7 as a whole. Thus, the support plate 9 is preferably disposed at a distance from the heat exchanger 7.

In view of this, in the first embodiment, the distance D1 from the heat exchanger 7 to the heat dissipation member 3 and the distance D2 from the heat exchanger 7 to the support plate 9 satisfy D1 < D2. In other words, the heat dissipation member 3 projects from the support plate 9 toward the heat exchanger 7.

Accordingly, the heat dissipation effect is enhanced by reducing the distance between the heat dissipation member 3 and the heat exchanger 7, and an increase in the ventilation resistance is suppressed by increasing the distance between the heat exchanger 7 and the support plate 9.

It is especially preferable that the distance D1 from the heat exchanger 7 to the heat dissipation member 3 and the distance D2 from the heat exchanger 7 to the support plate 9 satisfy D2/2 < D1 < D2. With this arrangement, both the effect of enhancing the heat dissipation effect and the effect of suppressing an increase in ventilation resistance can be easily obtained.

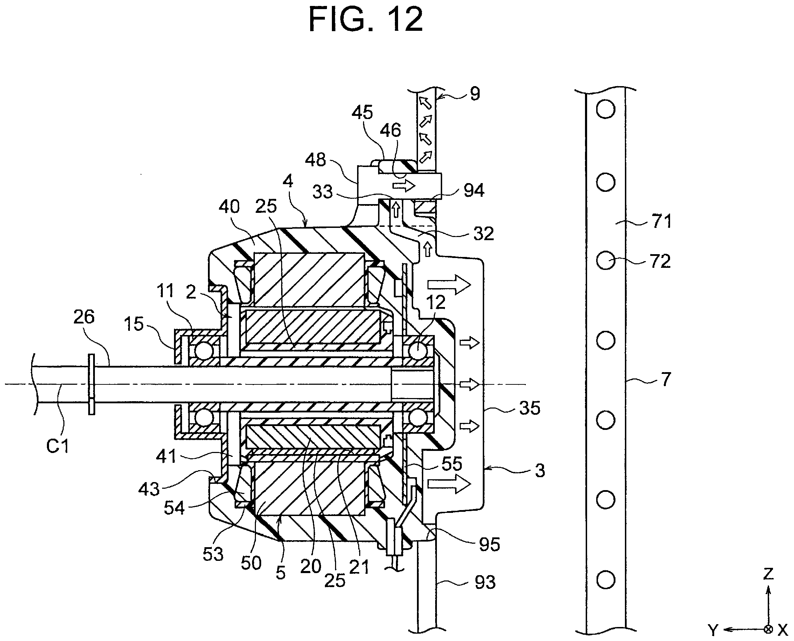

FIG. 12 is a schematic view for explaining a flow of heat around the heat dissipation member 3. Heat generated in the circuit board 55 or the bearing 12 by the influence of magnetic flux leakage of the rotor 2 flows into the heat dissipation member 3 adjacent to the circuit board 55 and the bearing 12.

Part of heat flowing into the heat dissipation member 3 further flows toward the fins 35 as indicated by arrows in FIG. 12, and is dissipated by air blown from the heat exchanger 7 side to the heat dissipation member 3. The heat dissipation member 3 is made of a metal having a high heat dissipation property, such as aluminum, and the fins 35 are provided on the side facing the heat exchanger 7. Thus, heat can be efficiently dissipated from the heat dissipation member 3.

Another part of heat flowing into the heat dissipation member 3 flows from the legs 32 of the heat dissipation member 3 to the screws 48, and then flows into the support plate 9. The heat flowing into the support plate 9 is dissipated by air flowing from the heat exchanger 7 side toward the fan portion 6, and also flows into the bottom plate 81 or the top plate 82 (FIG. 1) of the unit casing 8 to be dispersed.

As described above, the heat dissipation member 3, the screws 48, and the support plate 9 are made of metals and in contact with one another. Thus, heat is likely to flow through the heat dissipation member 3, the screws 48, and the support plate 9.

A thermal conductivity of each member will be described. In a case where the heat dissipation member 3 is made of aluminum, the heat dissipation member 3 has a thermal conductivity T1 of 190 to 250 W/m·K. In a case where the support plate 9 is made of carbon steel having a carbon content of 0.1 to 0.4%, the support plate 9 has a thermal conductivity T2 of 30 to 70 W/m·K. In a case where the screws 48 are made of carbon steel having a carbon content of 0.25% or less, the screws 48 have a thermal conductivity T3 of 60 to 100 W/m·K.

Thus, the thermal conductivity T1 of the heat dissipation member 3, the thermal conductivity T2 of the support plate 9, and the thermal conductivity T3 of the screws 48 satisfy T1 > T3 > T2. In other words, the thermal conductivity of the heat dissipation member 3 is the highest, the thermal conductivity of the screws 48 is the second highest, and the thermal conductivity of the support plate 9 is the lowest.

As described above, the heat of the heat dissipation member 3 flows into the support plate 9 by way of the screws 48. The member located upstream along the heat path has a higher conductivity. Thus, the heat is more likely to flow through the heat dissipation member 3, the screws 48, and the support plate 9 in this order, so that the heat dissipation effect can be enhanced.

The distance D1 from the heat exchanger 7 to the heat dissipation member 3, the distance D2 from the heat exchanger 7 to the support plate 9, and the distance D3 from the heat exchanger 7 to the screws 48 preferably satisfy D1 < D3 < D2.

Since the heat flows through the heat dissipation member 3, the screws 48, and the support plate 9 in this order, the member located upstream along the heat path is closer to the heat exchanger 7, and is more likely to be cooled by a flow of air passing through the heat exchanger 7. Accordingly, heat dissipation effect can be further enhanced.

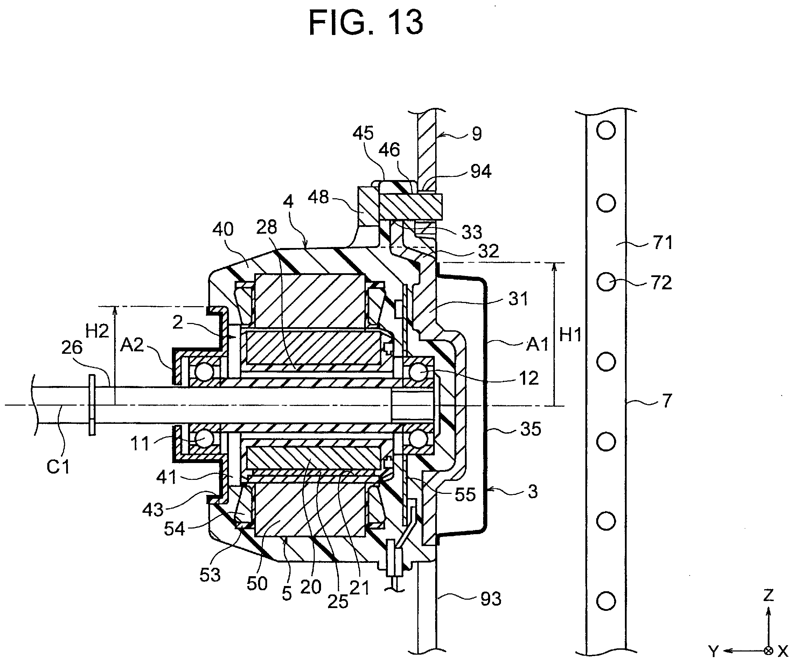

FIG. 13 is a schematic view for explaining areas of exposed surfaces of the heat dissipation member 3 and the bracket 15. The bracket 15 as a rotor holding member is attached to the side of the stator 5 opposite to the heat dissipation member 3 in the axial direction. The bracket 15 is fitted to a step portion 43 formed around the opening 41 of the mold resin portion 40, and supports the bearing 11.

The bracket 15 is made of a metal such as a galvanized steel sheet. The bracket 15 is not covered with the mold resin portion 40 and is exposed to the outside. Thus, the bracket 15 has a function to dissipate heat generated in the bearing 11, which is caused by magnetic flux leakage from the rotor 2, to the outside of the motor 10.

The total area of a portion of the heat dissipation member 3 that is not covered with the mold resin portion 40 and is exposed to the outside will be referred to as an area A1. The area A1 includes the areas of the plurality of fins 35 of the heat dissipation member 3. The total area of a portion of the bracket 15 that is not covered with the mold resin portion 40 and exposed to the outside will be referred to as an area A2.

In the direction of the air flow generated by rotation of the fan portion 6, the bracket 15 is located downstream of the mold stator 4. Thus, the flow rate of air passing through the bracket 15 is lower than the flow rate of air passing through the heat dissipation member 3. Accordingly, in a case where the area A1 of the exposed surface of the heat dissipation member 3 is larger than the area A2 of the exposed surface of the bracket 15, the heat dissipation effect can be enhanced.

A maximum dimension H1 of the exposed surface of the heat dissipation member 3 from the axis C1 is larger than a maximum dimension H2 of the exposed surface of the bracket 15 from the axis C1. Thus, it is easy to obtain the above described configuration in which the area A1 of the exposed surface of the heat dissipation member 3 is larger than the area A2 of the exposed surface of the bracket 15.

In a case where the bracket 15 is made of carbon steel having a carbon content of 0.1 to 0.4%, the bracket 15 has a thermal conductivity T4 of 30 to 70 W/m·K, which is lower than the thermal conductivity T1 (190 to 250 W/m·K) of the heat dissipation member 3. Since the thermal conductivity of the heat dissipation member 3 through which a larger amount of air passes is higher than the thermal conductivity of the bracket 15 through which a smaller amount of air passes, the heat dissipation effect can be further enhanced.

### (Advantages of Embodiment)

As described above, the outdoor unit 100 according to the first embodiment includes the motor 10 including the consequent pole rotor 2, the stator 5 surrounding the rotor 2 from outside in the radial direction, and the heat dissipation member 3 disposed on one side of the stator 5 in the axial direction, and the heat exchanger 7 disposed to face the heat dissipation member 3 in the axial direction. Since the heat dissipation member 3 faces the heat exchanger 7, air which passes through the heat exchanger 7 and whose temperature decreases can be blown to the heat dissipation member 3. Thus, heat can be efficiently dissipated from the motor 10 through the heat dissipation member 3.

In addition, since the support plate 9 supporting the motor 10 is disposed at a distance from the heat exchanger 7 in the axial direction, the ventilation resistance can be reduced, as compared to a case where the support plate 9 is disposed in contact with the heat exchanger 7.

Further, since the minimum distance D1 from the heat exchanger 7 to the heat dissipation member 3 and the minimum distance D2 from the heat exchanger 7 to the support plate 9 satisfy D1 < D2, an increase in the ventilation resistance can be suppressed, and heat can be efficiently dissipated from the motor 10 through the heat dissipation member 3.

Furthermore, in the case where the minimum distance D1 from the heat exchanger 7 to the heat dissipation member 3 and the minimum distance D2 from the exchanger 7 to the support plate 9 satisfy D2/2 < D1 < D2, both of the effect of enhancing the heat dissipation effect and the effect of suppressing an increase in the ventilation resistance can be easily obtained.

Furthermore, since the heat dissipation member 3 is fixed to the support plate 9 with the screws 48 (fixing member), the heat dissipation member 3 is in contact with the screws 48, and the screws 48 are in contact with the support plate 9, heat can be efficiently dissipated from the heat dissipation member 3 via the screws 48 and the support plate 9.

The motor 10 includes the mold resin portion 40 covering the stator 5 and the heat dissipation member 3, and thus the stator 5 and the heat dissipation member 3 can be integrally molded with a mold resin. Accordingly, the manufacturing cost can be reduced, as compared to a case where the heat dissipation member 3 is fixed to the stator 5 with screws or the like.

Each of the heat dissipation member 3, the screws 48, and the support plate 9 is made of a metal, and thus heat can be efficiently dissipated from the heat dissipation member 3 via the screws 48 and the support plate 9.

The minimum distance D1 from the heat exchanger 7 to the heat dissipation member 3, the minimum distance D2 from the heat exchanger 7 to the support plate 9, and the minimum distance D3 from the heat exchanger 7 to the screws 48 satisfy D1 < D3 < D2. The member located upstream along the heat path is located closer to the heat exchanger 7, and is more easily cooled by a flow of air passing through the heat exchanger 7. Accordingly, heat can be efficiently dissipated from the heat dissipation member 3, the screws 48, and the support plate 9.

The thermal conductivity T1 of the heat dissipation member 3, the thermal conductivity T2 of the support plate 9, and the thermal conductivity T3 of the screws 48 satisfy T1 > T3 > T2. The member located upstream along the heat path has a higher thermal conductivity and is more easily cooled. Accordingly, heat can be efficiently dissipated from the heat dissipation member 3, the screws 48, and the support plate 9.

The fan portion 6 is disposed on the side opposite to the heat dissipation member 3 with respect to the stator 5 in the axial direction. Thus, heat can be dissipated from the heat dissipation member 3 by means of air flowing from the heat exchanger 7 toward the fan portion 6.

The bracket 15 (rotor holding member) is attached to the side of the stator 5 opposite to the heat dissipation member 3 in the axial direction, and the thermal conductivity of the heat dissipation member 3 is higher than the thermal conductivity of the bracket 15. Since the heat dissipation member 3 through which a larger amount of air passes has a higher thermal conductivity, the heat dissipation effect can be further enhanced.

The total area A1 of the exposed surface of the heat dissipation member 3 exposed to the outside of the motor 10 and the total area A2 of the exposed surface of the bracket 15 exposed to the outside of the motor 10 satisfy A1 > A2. Since the exposed surface of the heat dissipation member 3 through which a larger amount of air passes has a larger area, the heat dissipation effect can be enhanced.

### (Air Conditioner)

Next, an air conditioner to which the outdoor unit 100 according to the embodiment is applicable will be described. FIG. 12 is a diagram illustrating a configuration of an air conditioner 200 to which the outdoor unit 100 according to the first embodiment is applied. The air conditioner 200 includes the outdoor unit 100, an indoor unit 201, and a refrigerant pipe 207 connecting the outdoor unit 200 and the indoor unit 201 to each other.

The indoor unit 201 includes an indoor blower 202. The indoor blower 202 includes blades 203 of, for example, a crossflow fan, a motor 204 for driving the blades 203, a heat exchanger 205 disposed to face the blades 203, and a casing 206 housing these members.

The outdoor unit 100 includes the blower 1, a compressor 101, the heat exchanger 7, and a not shown decompressor. The compressor 101, the heat exchanger 7, and the decompressor are connected to each other by the refrigerant pipe 207 together with the heat exchanger 205 of the indoor unit 201, and constitute a refrigerant circuit.

In the outdoor unit 100, the fan portion 6 rotates by rotation of the motor 10 of the blower 1, so that outdoor air passes through the heat exchanger 7. In a heating operation, when a refrigerant compressed by the compressor 101 evaporates in the heat exchanger 7 (evaporator), the air passing through the heat exchanger 7 is deprived of evaporation heat, so that the air is cooled. The cooled air passes through the heat dissipation member 3 of the motor 10 by rotation of the fan portion 6, and is released to the outside through the opening 86 (FIG. 1) of the front panel 85.

In the indoor unit 201, the blades 203 rotate by rotation of the motor 204 of the indoor blower 202 and send air into the room. In a heating operation, air heated while the refrigerant is condensed in the heat exchanger 205 (condenser) is sent into the room by air supply from the indoor blower 202.

As described in the first embodiment, heat is efficiently dissipated from the motor 10 by air passing through the heat exchanger 7, and thus heating of the motor 10 can be suppressed. Accordingly, stable operation of the blower 1 can be achieved, so that reliability of the air conditioner 200 can be increased.

The motor 10 described in this embodiment is an inner permanent magnet (IPM) motor in which the permanent magnets 25 are embedded in the rotor 2, but may be a surface permanent magnet (SPM) motor in which the permanent magnets 25 are attached to the surface of the rotor 2.

Although the preferred embodiment of the present disclosure has been specifically described above, the present disclosure is not limited to the embodiment, and various improvements and modifications may be made without departing from the scope of the present disclosure.

### DESCRIPTION OF REFERENCE CHARACTERS

1 blower, 2 rotor, 3 heat dissipation member, 4 motor housing, 5 stator, 6 fan portion, 7 heat exchanger, 8 unit casing, 9 support plate, 10 motor, 11, 12 bearing, 15 bracket (rotor holding member), 20 rotor core, 21 magnet insertion hole, 25 magnet (permanent magnet), 26 shaft, 28 resin portion, 50 stator core, 51 yoke, 52 tooth, 53 insulating portion, 54 coil, 55 board, 31 flange, 32 leg, 33 recess, 35 fin, 40 mold resin portion, 45 leg, 46 hole, 48 screw (fixing member), 61 hub, 62 blade, 71 fin, 72 heat transfer pipe, 81 bottom plate, 82 top plate, 85 front panel, 91 lower arm, 92 upper arm, 93 attachment plate, 100 outdoor unit, 101 compressor, 200 air conditioner, 201 indoor unit, 202 indoor blower, 207 refrigerant pipe.

## Claims

1. An outdoor unit comprising:
a motor comprising:
a rotor rotatable about an axis, the rotor having a rotor core and a permanent magnet attached to the rotor core, the permanent magnet forming a magnet magnetic pole, a part of the rotor core forming a virtual magnetic pole;
a stator surrounding the rotor from outside in a radial direction about the axis; and
a heat dissipation member disposed on a side of the stator in a direction of the axis; and
a heat exchanger disposed to face the heat dissipation member in the direction of the axis.

2. The outdoor unit according to claim 1, further comprising a support plate facing the heat exchanger and supporting the motor.

3. The outdoor unit according to claim 2, wherein the support plate is disposed at a distance from the heat exchanger in the direction of the axis.

4. The outdoor unit according to claim 3, wherein a minimum distance D1 from the heat exchanger to the heat dissipation member and a minimum distance D2 from the heat exchanger to the support plate satisfy D1 < D2.

5. The outdoor unit according to claim 4, wherein D1 and D2 satisfy D2/2 < D1 < D2.

6. The outdoor unit according to any one of claims 2 to 5, wherein the heat dissipation member is fixed to the support plate by a fixing member, and
wherein the heat dissipation member is in contact with the fixing member, and the fixing member is in contact with the support plate.

7. The outdoor unit according to claim 6, wherein the motor has a resin portion covering the stator and the heat dissipation member, and
wherein the resin portion is fixed to the support plate by the fixing member.

8. The outdoor unit according to claim 6 or 7, wherein the fixing member is made of a metal, and the support plate is made of a metal.

9. The outdoor unit according to any one of claims 6 to 8, wherein a minimum distance D1 from the heat exchanger to the heat dissipation member, a minimum distance D2 from the heat exchanger to the support plate, and a distance D3 from the heat exchanger to the fixing member satisfy D1 < D3 < D2.

10. The outdoor unit according to any one of claims 6 to 9, wherein a thermal conductivity T1 of the heat dissipation member, a thermal conductivity T2 of the support plate, and a thermal conductivity T3 of the fixing member satisfy T1 > T3 > T2.

11. The outdoor unit according to any one of claims 1 to 10, wherein a fan portion is attached to the rotor, and
wherein the fan portion is disposed on a side opposite to the heat dissipation member with respect to the stator in the direction of the axis.

12. The outdoor unit according to any one of claims 1 to 11, wherein a rotor holding member to hold the rotor is attached to a side of the stator opposite to the heat dissipation member in the direction of the axis.

13. The outdoor unit according to claim 12, wherein a thermal conductivity of the heat dissipation member is higher than a thermal conductivity of the rotor holding member.

14. The outdoor unit according to claim 12 or 13, wherein a total area A1 of an exposed surface of the heat dissipation member exposed to outside of the motor and a total area A2 of an exposed surface of the rotor holding member exposed to the outside of the motor satisfy A1 > A2.

15. The outdoor unit according to any one of claims 1 to 14, wherein the heat dissipation member has a fin.

16. An air conditioner comprising:
the outdoor unit according to any one of claims 1 to 15; and
an indoor unit connected to the outdoor unit via a refrigerant pipe.
